## Europäisches Patentamt
## European Patent Office
## Office européen des brevets

(11) Veröffentlichungsnummer: **0 461 472 A2**

# EUROPÄISCHE PATENTANMELDUNG

(21) Anmeldenummer: 91108762.5

(22) Anmeldetag: 29.05.91

(51) Int. Cl.5: **B09B 1/00**, E02D 31/00

(30) Priorität: 12.06.90 DE 4018822
12.06.90 DE 4018824
17.08.90 DE 4026048
13.11.90 DE 4036103

(43) Veröffentlichungstag der Anmeldung:
18.12.91 Patentblatt 91/51

(84) Benannte Vertragsstaaten:
AT CH DE DK ES FR GB IT LI NL SE

(71) Anmelder: **Paurat, Friedrich Wilhelm**
**Kasselweg 29**
**W-4230 Wesel 1(DE)**

Anmelder: **Paurat, Roland, Dipl.-Ing.**
**Blumenstrasse 11**
**W-4230 Wesel 13(DE)**

(72) Erfinder: **Paurat, Friedrich Wilhelm**
**Kasselweg 29**
**W-4230 Wesel 1(DE)**
Erfinder: **Paurat, Roland, Dipl.-Ing.**
**Blumenstrasse 11**
**W-4230 Wesel 13(DE)**

(74) Vertreter: **Andrejewski, Walter et al**
**Patentanwälte Andrejewski, Honke & Partner**
**Postfach 10 02 54 Theaterplatz 3**
**W-4300 Essen 1(DE)**

(54) Baukomplex für die Sicherung einer Deponie und Verfahren zur Herstellung des Baukomplexes.

(57) In mehreren Ausbaustufen im Grundwasserbereich des Gebirges unterhalb einer Deponie einrichtbarer Baukomplex für die Sicherung der Deponie. Zum Baukomplex gehören:
Ein Bauwerk einer ersten Ausbaustufe, welches aus einer in einer Längsrichtung des Baukomplexes verlaufenden Servicestrecke sowie aus zumindest einer Reihe von Drainagebohrungen mit eingebrachten Drainagerohren besteht, die aus einem Bereich neben der Deponie von übertage aus schräg abwärts zu der Servicestrecke hingeführt sind und dieser münden,
ein Bauwerk einer zweiten Ausbaustufe, welches aus einer Abdichtungsschicht aus einem Abdichtungswerkstoff besteht, der über die Drainagerohre in das Gebirge in der Umgebung der Drainagerohre eingepreßt worden ist, wobei die Drainagerohre als solche in die Abdichtungsschicht eingebettet sind,
ein Bauwerk einer dritten Ausbaustufe, welches aus einem Schlitzraum in dem Gebirge unter der Abdichtungsschicht besteht, welcher Schlitzraum als bergbaulicher Strebbetrieb ausgefahren und mit abdichtendem Vollversatz verfüllt ist.
Auch ein Verfahren zur Herstellung des Baukomplexes wird angegeben.

Die Erfindung betrifft einen in mehreren Ausbaustufen im Grundwasserbereich des Gebirges unterhalb einer Deponie einrichtbaren Baukomplex für die Sicherung der Deponie. Die Erfindung betrifft fernerhin ein Verfahren zur Herstellung eines solchen Baukomplexes.

Sicherung einer Deponie bedeutet im Rahmen der Erfindung, daß eine bereits bestehende Deponie, insbesondere eine Sonderdeponie, mit Hilfe eines unterirdischen Abdichtungsbauwerkes so gekapselt wird, daß kontaminierende Substanzen, die in den deponierten Abfallstoffen enthalten sind oder gebildet werden, nicht in störendem Maße freikommen und nicht, beispielsweise grundwassergefährdend, vagabundieren können. Gestein bezeichnet jeden Untergrund und jede Umgebung einer Deponie, also auch Sand, Mergel, Ton und Lehm. Verfüllstoff bezeichnet alle Baustoffe, die in der Lage sind, einen unterhalb der Deponie bergbaulich vorgetriebenen Schlitzraum ausreichend aufzuhalten und die allein und/oder in Verbindung mit Abdichtungselementen und/oder Drainageelementen ein Abdichtungsbauwerk bilden, welches in abdichtungstechnischer Hinsicht den Anforderungen genügt. Abdichtungselemente sind z. B. Abdichtungsfolien. Drainageelemente dienen dazu, anfallendes kontaminiertes Sickerwasser kontrolliert abzuführen. Bergbautechnische Hilfsmittel bezeichnet im Rahmen der Erfindung Maschinen und Einrichtungen, wie sie im untertägigen Steinkohlenbergbau üblich sind. Die Erfindung verwendet insoweit auch die bergbauübliche Terminologie.

Bei dem bekannten Verfahren, von dem die Erfindung ausgeht (DE-OS 36 17 956), wird der Schlitzraum parallel zur Hauptstrecke vorgetrieben, und zwar in nebeneinander angeordneten, tunnelartigen Abschnitten mit entsprechendem, vortriebsschildartigem Gerät. Gleichzeitig wird eine Dichtungssohle eingebaut. Dabei wird das vortriebsseitig hereingewonnene Gestein versatz seitig hinter dem Gerät verpreßt. Überschüssiges Gestein wird nach übertage verbracht. Über die Dichtungssohle ablaufendes Sickerwasser könnte über die Hauptstrecke abgezogen werden. - Die vorstehend beschriebenen bekannten Maßnahmen sind aufwendig, zumal sie von übertage aus weder durchgeführt noch unterstützt oder gesteuert werden können.

Im Rahmen von anderen, aus der Praxis bekannten Maßnahmen werden beidseits und unterhalb der Deponie zwei in Längsrichtung der Deponie verlaufende Strecken aufgefahren. Mit Hilfe von Strebmaschinen wird unterhalb der Deponie ein im wesentlichen waagerecht oder in bezug auf die Horizontale leicht schräg verlaufender Schlitzraum aufgefahren, der nicht nach übertage geführt ist. Strebmund und Strebmündung schließen vielmehr an die Strecken an. Die Strecken schließen an Schächte an. Auch diese Maßnahmen sind aufwendig. Sie verlangen die gesamte Technologie eines bergbaulichen Untertagebetriebes mit Gewinnungsstreb, Strecken und Schächten sowie zusätzlich die abdichtungstechnischen Einrichtungen und Arbeiten. Die bekannten Maßnahmen erfüllen trotz des großen technologischen Aufwandes ohne weiteres in abdichtungstechnischer Hinsicht die Anforderungen nicht. Tatsächlich wird unter der Deponie lediglich ein Abdichtungsboden erzeugt. Eine vollständige Kapselung wird durch die beschriebenen Maßnahmen nicht erreicht. Um eine solche Kapselung zu erreichen, müssen an den Abdichtungsboden randseitig vertikale Abdichtungswände angeschlossen werden, die den Abdichtungsboden gleichsam zu einem oben offenen Abdichtungskasten ergänzen. Das sind zusätzliche Maßnahmen, die mit Schlitzwandmaschinen und Aggregaten der Tiefbautechnik aufwendig verwirklicht werden müssen.

Die Durchführung der vorstehend beschriebenen bekannten Maßnahmen für die Sicherung einer Deponie verlangt eine mehr als orientierende und aufwendige, vorausgehende Erforschung der geologischen Verhältnisse einschließlich der Grundwasserverhältnisse und der Sickerwasserverhältnisse in der Umgebung und unterhalb der Deponie. Die bekannten Maßnahmen bestehen im übrigen aus Bauwerken, die unter Umständen bereichsweise aufwendiger sind, als es zur Sicherung der Deponie in einem bestimmten Bereich erforderlich ist.

Der Erfindung liegt demgegenüber die Aufgabe zugrunde, ein Bauwerk für die Sicherung einer Deponie anzugeben, zu dessen Einrichtung eine aufwendige Erforschung der geologischen Verhältnisse einschließlich der Grundwasserverhältnisse und Sickerwasserverhältnisse in der Umgebung und unterhalb der Deponie nicht mehr erforderlich ist. Das schließt nicht aus, daß eine orientierende Analyse der geologischen Verhältnisse und der Grundwasserverhältnisse durchgeführt wird. Der Erfindung liegt fernerhin die Aufgabe zugrunde, ein Verfahren anzugeben, mit denen ein solches Bauwerk einfach und funktionssicher errichtet werden kann.

Zur Lösung dieser Aufgabe ist Gegenstand der Erfindung zunächst ein in mehreren Ausbaustufen im Grundwasserbereich des Gebirges unterhalb einer Deponie einrichtbarer Baukomplex für die Sicherung der Deponie, der gekennzeichnet ist durch ein Bauwerk einer ersten Ausbaustufe, welches aus einer in einer Längsrichtung des Baukomplexes verlaufenden Servicestrecke sowie aus zumindest einer Reihe von Drainagebohrungen mit eingebrachten Drainagerohren besteht, die aus einem Bereich neben der Deponie von übertage aus zu der Servicestrecke hingeführt sind und dieser münden, ein Bauwerk einer zweiten Ausbaustufe, welches aus einer Abdichtungsschicht aus einem Abdichtungswerkstoff besteht, der über die Drainagerohre in das Gebirge in der Umgebung der Drainagerohre eingepreßt worden ist, wobei die Drainagerohre als solche in die Abdichtungsschicht eingebettet sind, ein Bauwerk einer dritten Ausbaustufe, welches aus einem Schlitzraum in dem Gebirge unter der Abdichtungsschicht besteht, welcher Schlitzraum als bergbaulicher Strebbetrieb aus gefahren und mit abdichtendem Vollversatz verfüllt ist.

Erfindungsgemäß ist das Bauwerk der ersten Ausbaustufe zugleich eine Einrichtung, welche die Erforschung der geologischen Verhältnisse, der Grundwasser- und Sickerwasserverhältnisse erlaubt. Insoweit ist es lediglich erforderlich, Untersuchungen des Gesteins durchzuführen, welches beim Einbringen der Drainagebohrungen hereingewonnen wird. z. B. auch in Form von Bohrkernen, und von der Servicestrecke aus das einlaufende Grund- und Sickerwasser aufzufangen und zu untersuchen. Dabei können die Drainagebohrungen als Brunnenrost abstandsmäßig so eingerichtet werden, daß der Rost Grundwasser und Sickerwasser aus hydraulischen Gründen nicht passieren läßt, weil die Drainagebohrungen Senken darstellen, in die das Grund- und Sickerwasser einläuft. Je nach den speziellen Verhältnissen ist zumindest bereichsweise durch das Bauwerk der ersten Ausbaustufe einen allen Anforderungen genügende Sicherung der Deponie bereits gegeben. Wo die über den Brunnenrost bewirkte Absicherung mit Abführung des Sickerwassers in bezug auf die gesamte Deponie oder bereichsweise nicht ausreicht, wird das Bauwerk der zweiten Ausbaustufe eingerichtet, - und so weiter fort nach Maßgabe der jeweiligen Erfordernisse.

Im einzelnen bestehen im Rahmen der Erfindung mehrere Möglichkeiten der weiteren Ausbildung und Gestaltung. So kann im Zusammenhang mit der ersten Ausbaustufe die Servicestrecke im Bereich der Grundrißmitte unterhalb der Deponie angeordnet werden, während die Drainagebohrungen und Drainagerohre beidseits schräg nach übertage führend an diese Servicestrecke angeschlossen sind. Es besteht aber auch die Möglichkeit, an einer Seite der Servicestrecke bzw. an beiden Seiten der Servicestrecke jeweils zwei Reihen von Drainagebohrungen und Drainagerohren nach Maßgabe der Höhe des später einzubringenden Schlitzraumes mit Abstand übereinander und gegeneinander versetzt anzuordnen. Im Zusammenhang mit der zweiten Ausbaustufe empfiehlt es sich, eine Abdichtungsschicht zumindest im Bereich der unteren Reihe bzw. der unteren Reihen der Drainagebohrungen und der Drainagerohre anzuordnen. Im Rahmen der dritten Ausbaustufe kann man in dem Schlitzraum bzw. in den Schlitzräumen zusätzlich eine Abdichtungsfolie anordnen.

Die Herstellung des erfindungsgemäßen Baukomplexes kann verfahrensmäßig auf verschiedene Weise erfolgen. Nach bevorzugter Ausführungsform der Erfindung wird bei einem Verfahren zur Herstellung des Bauwerkes der ersten Ausbaustufe zunächst mit einer Streckenvortriebsmaschine die Servicestrecke aufgefahren und werden danach von übertage aus mit den Hilfsmitteln der Erdölbohrtechnik mit Hilfe von Casings, die aus einzelnen mit Drainagelöchern versehenen Casingschüssen zusammengesetzt sind, verrohrte Drainagebohrungen eingebracht. Dabei können in die Casings nach Ziehen des Bohrgestänges Tubings als Wartungsrohre für die Casings eingeführt werden. In Fortführung lehrt die Erfindung zur Herstellung des Bauwerkes der zweiten Ausbaustufe, den Abdichtungswerkstoff durch die Drainagelöcher der Casings in das die Casings umgebende Gebirge einzudrücken. In der Fortführung zur Herstellung des Bauwerkes der dritten Ausbaustufe lehrt die Erfindung, daß der Schlitzraum quer zur Servicestrecke sowie von dieser ausgehend nach übertage als bergbautechnischer Strebbetrieb mit Strebmaschinen in Form einer Hereingewinnungsmaschine, einer Fördereinrichtung und eines Ausbaus aufgefahren wird, dessen Strebmündung in der Servicestrecke angeordnet wird und dessen Strebmund zutage tritt, wobei das mit der Hereingewinnungsmaschine hereingewonnene Gestein mit Hilfe der Fördereinrichtung über die Strebmündung in die Servicestrecke eingeführt wird und in dieser nach übertage verbracht wird und wobei zumindest der abdichtende Vollversatz über den übertägigen Strebmund in den Schlitzraum eingeführt wird. Im Strebbetrieb kann dabei mit einem Kettenkratzförderer gearbeitet werden, auf dessen Förderrinne eine Schrämmaschine geführt wird, wobei die Antriebsaggregate für den Kettenkratzförderer und die Schrämmaschine im Bereich des zuvor erzeugten Strebmundes übertage angeordnet werden und wobei in dem Strebbetrieb an die Förderrinne Schreitausbaugestelle angeschlossen werden, die nach Maßgabe des wandernden Strebbetriebes der fortschreitenden Hereingewinnung des Gesteins folgend, gesteuert werden.

Im folgenden wird die Erfindung anhand einer lediglich ein Ausführungsbeispiel darstellenden Zeichnung ausführlicher erläutert. Es zeigen in schematischer Darstellung

Fig. 1    einen Vertikalschnitt durch eine zu sichernde Deponie mit Servicestrecke in Längsrichtung des Baukomplexes,

Fig. 2    einen Schnitt in Richtung A-A durch den Gegenstand der Fig. 1 mit Bauwerk der ersten Ausbaustufe,

Fig. 3    entsprechend der Fig. 2 einen Schnitt durch eine Deponie mit Bauwerk der zweiten Ausbaustufe,

Fig. 4 entsprechend der Fig. 2 einen Schnitt durch eine Deponie mit Bauwerk der ersten, zweiten und dritten Ausbaustufe,

Fig. 5 entsprechend der Fig. 2 einen Schnitt durch eine zu sichernde Deponie mit weiteren Details,

Fig. 6 den vergrößerten Ausschnitt B aus dem Gegenstand der Fig. 5,

Fig. 7 einen Schnitt entsprechend der Fig. 5, darstellend die zweite Ausbaustufe,

Fig. 8 in gegenüber der Fig. 7 vergrößertem Maßstab den Schnitt C-C durch den Gegenstand der Fig. 7,

Fig. 9 in gegenüber der Fig. 7 vergrößertem Maßstab den Ausschnitt D aus dem Gegenstand der Fig. 4 und

Fig. 10 perspektivisch ergänzt den Schnitt E-E durch den Gegenstand der Fig. 9.

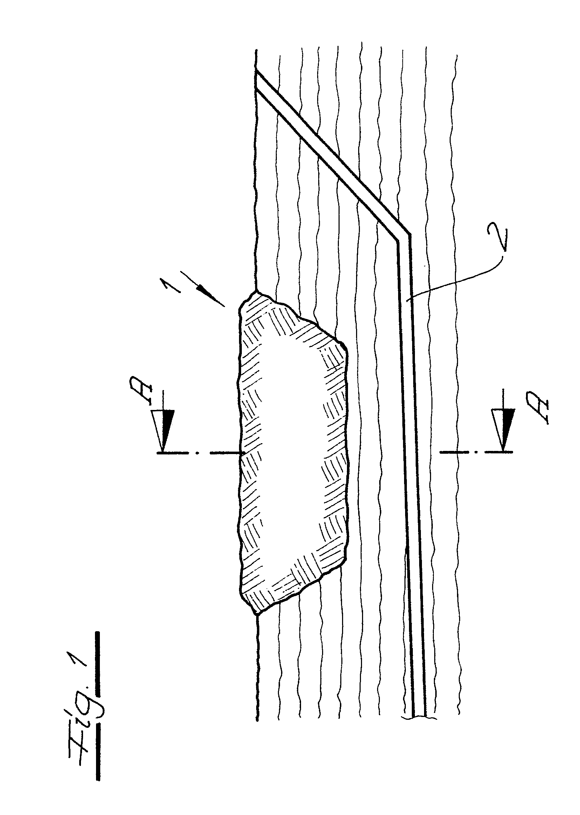

In den Fig. 1 bis 4 erkennt man eine zu sichernde Deponie, die durch einen besonderen Baukomplex gesichert ist, der in mehreren Ausbaustufen im Grundwasserbereich des Gebirges unterhalb der Deponie einrichtbar ist.

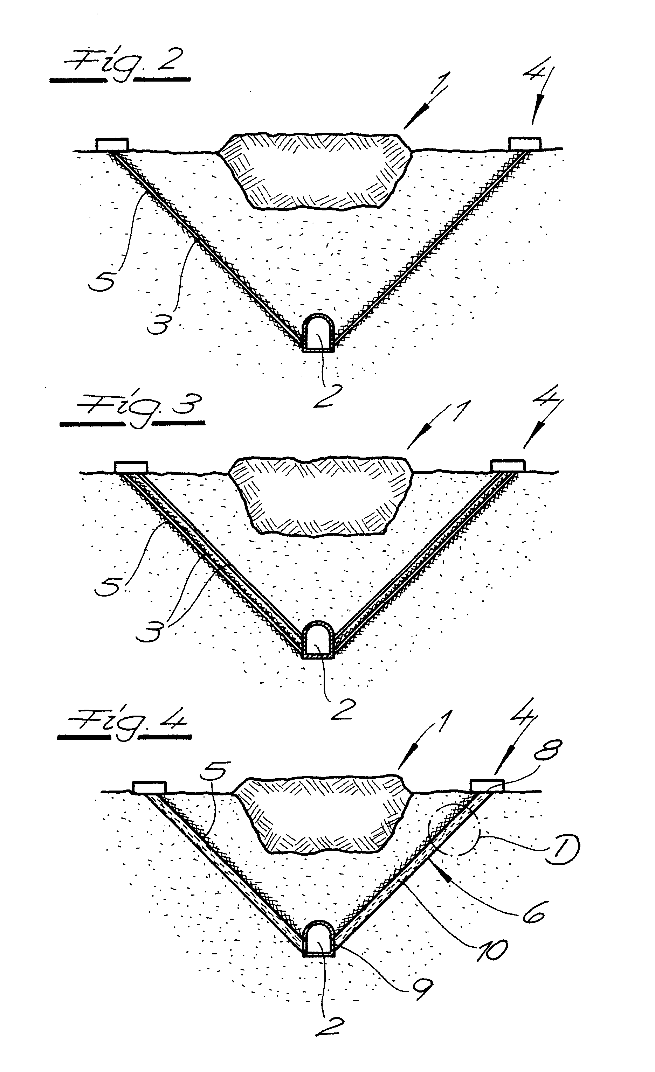

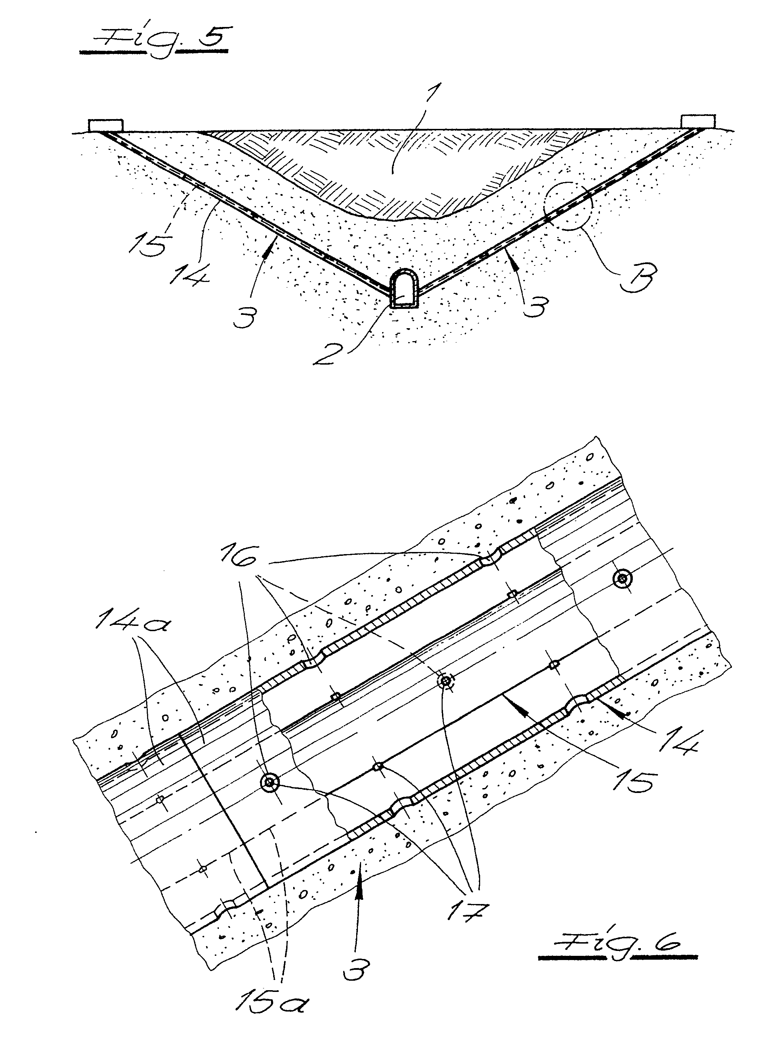

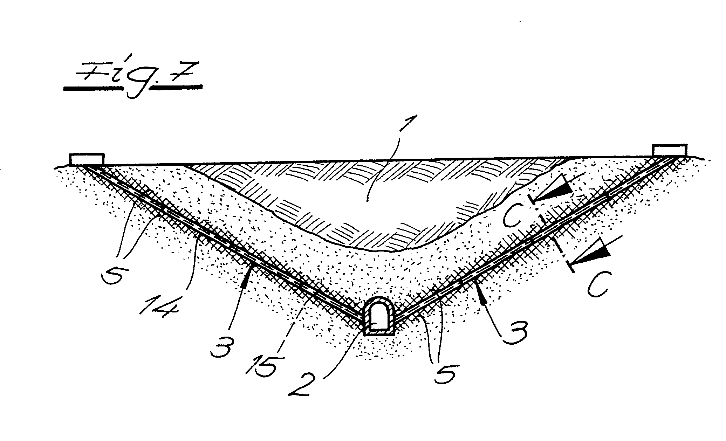

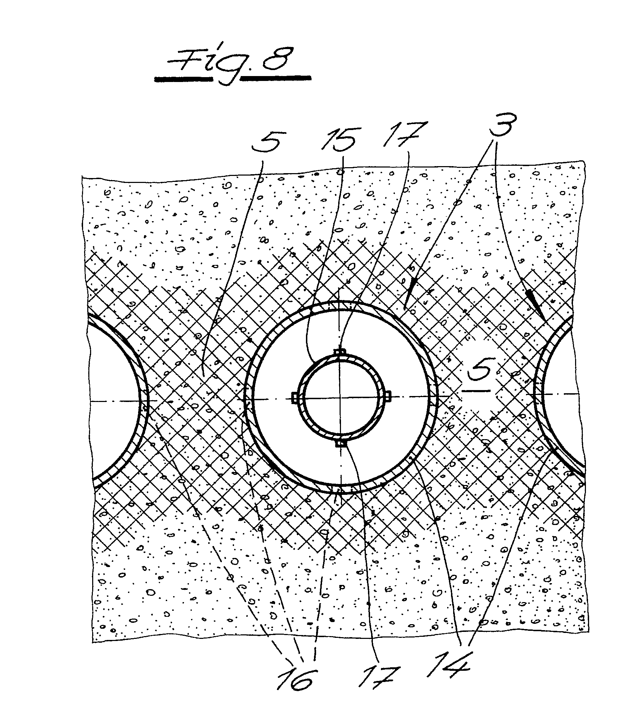

Die Fig. 1 und 2 zeigen ein Bauwerk der ersten Ausbaustufe, welches aus einer in einer Längsrichtung des Baukomplexes verlaufenden Servicestrecke 2 sowie aus zumindest einer Reihe von Drainagebohrungen 3 mit eingebrachten Drainagerohren besteht, die aus einem Bereich 4 neben der Deponie 1 von übertage aus schräg abwärts zu der Servicestrecke 2 hingeführt sind und in dieser münden. Man erkennt in der Fig. 2 eine Weiterführung zum Bauwerk der zweiten Ausbaustufe. Dieses besteht aus einer Abdichtungsschicht 5 aus einem Abdichtungswerkstoff, der über die Drainagerohre der Drainagebohrungen 3 in das Gebirge eingepreßt worden ist, wobei die Drainagerohre als solche in die Abdichtungsschicht eingebettet sind. Insoweit wird auch auf die Fig. 5 bis 8 verwiesen.

Erforderlichenfalls wird der Baukomplex durch ein Bauwerk einer dritten Ausbaustufe vervollständigt. Dazu wird auf die Fig. 4 verwiesen. Man erkennt ein Bauwerk, welches aus einem Schlitzraum 6 in dem Gebirge unter der Abdichtungsschicht 5 besteht, der als bergbaulicher Strebbetrieb aufgefahren und mit abdichtendem Vollversatz 7 verfüllt ist. Der Mund 8 des Schlitzraumes 6 befindet sich übertage, die Mündung 9 führt in die Servicestrecke 2. Im Ausführungsbeispiel und nach bevorzugter Ausführungsform der Erfindung ist die Servicestrecke 2 im Bereich der Grundrißmitte unterhalb der Deponie 1 angeordnet. Die Drainagebohrungen 3 und die Drainagerohre sind beidseits schräg nach übertage führend an diese Servicestrecke 2 angeschlossen. Man erkennt in der Fig. 3, daß an beiden Seiten der Servicestrecke 2 jeweils zwei Reihen von Drainagebohrungen 3 und Drainagerohren nach Maßgabe der Höhe des später einzubringenden Schlitzraumes 6 mit Abstand übereinander und gegeneinander versetzt angeordnet sind. Die schon erwähnte Abdichtungsschicht 5 ist zumindest im Bereich der unteren Reihe bzw. der unteren Reihen der Drainagebohrungen 3 angeordnet. Sie kann aber auch zusätzlich im Bereich der oberen Reihe bzw. der oberen Reihen der Drainagebohrungen 3 angeordnet sein. In dem Schlitzraum 6 bzw. in den Schlitzräumen 6 befindet sich Abdichtungsmaterial 10 und zusätzlich eine Abdichtungsfolie, die in der Fig. 4 nicht gezeichnet wurde.

Der Baukomplex insgesamt wurde so hergestellt, wie es sich aus den Patentansprüchen 6 bis 10 ergibt. Zur Erläuterung dienen die Fig. 5 bis 10.

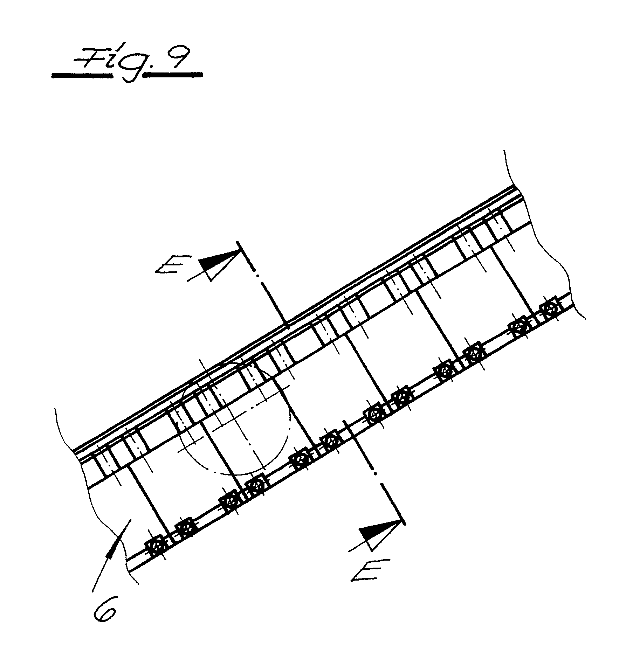

Aus einer vergleichenden Betrachtung der Fig. 5 und 6 entnimmt man, daß die Drainagebohrungen 3 zum Auffangen des Sickerwassers Casings 14 und Tubings 15 von Rohrsystemen aufweisen, wie sie im Ölfeld bei Erdölbohrungen eingesetzt und wie sie bei der Gewinnung von Erdöl üblich sind. Die Casings 14 sind mit Sickerwassereintrittsbohrungen 16 versehen, wozu auf die Fig. 6 verwiesen wird. Die Tubings 15 sind zur Wartung des Innenraumes der Casings 14 und der Sickerwassereintrittsbohrungen 16 einsetzbar. Die Casings 14 sind mit Abstand voneinander angeordnet und bilden einen Brunnenrost, in den das Sickerwasser, gegebenenfalls zusammen mit Grundwasser, eintritt und aus dem es zur Servicestrecke 2 abläuft oder abgesaugt wird. Der Abstand der Casings 14 ist so gewählt, daß das Sickerwasser über das hydrostatische Potential, welches im umgebenden Gebirge an jedem Ort zwischen den Casings 14 und dem Innenraum der Casings 14 besteht und im übrigen auch in der Umgebung dieses Ortes aus hydrodynamischen Gründen nicht in der Lage ist, den Brunnenrost zu passieren. Man erkennt insbesondere in der Fig. 6, daß die Rohre aus einzelnen und gekuppelten Casing-Rohrschüssen 14a und Tubing-Rohrschüssen 15a zusammengesetzt sind. Die Casing-Rohrschüsse 14a sowie die Tubing-Rohrschüsse 15a sind von übertage aus nachführbar. Nach Maßgabe der Nachführung sind die Casing-Rohrschüsse 14a von der Servicestrecke 2 aus abziehbar.

Die Tubings 15 weisen Reinigungseinrichtungen für die Casings 14 bzw. die Sickerwassereintrittsbohrungen 16 auf. Insoweit sind im Ausführungsbeispiel, wie die Fig. 6 erkennen läßt, die Tubings 15 gleichsam mit Reinigungswasseraustrittsdüsen 17 versehen. Das Reinigungswasser ist dabei über die Tubings 15 zuführbar.

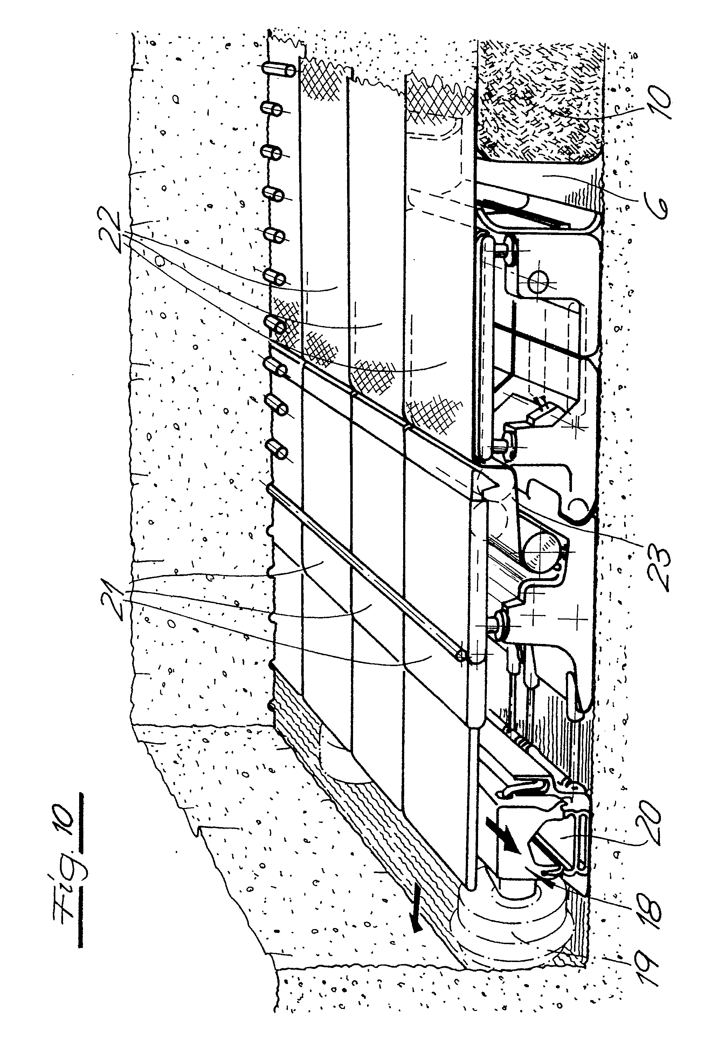

Mit der obigen Beschreibung sind grundsätzlich auch die Fig. 7 und 8 verständlich. Man erkennt, daß über die Sickerwassereintrittsbohrungen 16 ein Abdichtungsmittel in das umgebende Gebirge eingedrückt wurde und dort eine Abdichtungsschicht 5 gebildet hat, die durch Kreuzschraffur angedeutet wurde. Die Abdichtungsschicht 5 ist so angeordnet und ausgelegt, daß das Sickerwasser zu den Tubings 15 und den Sickerwassereintrittsbohrungen 16 gelangen kann.

Die Fig. 9 und 10 verdeutlichen, wie der Schlitzraum aufgefahren werden kann. In der Fig. 9 erkennt man entsprechend einen vergrößerten Ausschnitt C aus dem Gegenstand der Fig. 4 den Schlitzraum 6 mit Teilen der Strebmaschinen. In bezug auf die Strebmaschinen wird auf die Fig. 10 verwiesen, die mit perspektivischer Ergänzung dem Schnitt E-E in Fig. 9 entspricht. Man erkennt die Hereingewinnungsmaschine 18 mit Schrämwalze 19, die Fördereinrichtung 20 und die Schreitausbaugestelle 21, die insoweit an sich bekannt sind. Die schreitausbaugestellartigen Einrichtungen 22 dienen der Einbringung einer Abdichtungsfolie 23 sowie der Einbringung des Abdichtungsmaterials 10, auch in Form von abdichtend aufgebautem Vollversatz, der wie Blasversatz eingebracht wird.

## Patentansprüche

1. In mehreren Ausbaustufen im Grundwasserbereich des Gebirges unterhalb einer Deponie einrichtbarer Baukomplex für die Sicherung der Deponie, **gekennzeichnet durch**
   a) ein Bauwerk einer ersten Ausbaustufe, welches aus einer in einer Längsrichtung des Baukomplexes verlaufenden Servicestrecke sowie aus zumindest einer Reihe von Drainagebohrungen mit eingebrachten Drainagerohren besteht, die aus einem Bereich neben der Deponie von übertage aus zu der Servicestrecke hingeführt sind und dieser münden,
   b) ein Bauwerk einer zweiten Ausbaustufe, welches aus einer Abdichtungsschicht aus einem Abdichtungswerkstoff besteht, der über die Drainagerohre in das Gebirge in der Umgebung der Drainagerohre eingepreßt worden ist, wobei die Drainagerohre als solche in die Abdichtungsschicht eingebettet sind,
   c) ein Bauwerk einer dritten Ausbaustufe, welches aus einem Schlitzraum in dem Gebirge unter der Abdichtungsschicht besteht, welcher Schlitzraum als bergbaulicher Strebbetrieb ausgefahren und mit abdichtendem Vollversatz verfüllt ist.

2. Bauwerk nach Anspruch 1, erste Ausbaustufe, wobei die Servicestrecke im Bereich der Grundrißmitte unterhalb der Deponie angeordnet sowie die Drainagebohrungen und Drainagerohre beidseits schräg nach übertage führend an diese Servicestrecke angeschlossen sind.

3. Bauwerk nach einem der Ansprüche 1 oder 2, erste Ausbaustufe, wobei an einer Seite der Servicestrecke bzw. an beiden Seiten der Servicestrecke jeweils zwei Reihen von Drainagebohrungen und Drainagerohren nach Maßgabe der Höhe des später einzubringenden Schlitzraumes mit Abstand übereinander und gegeneinander versetzt angeordnet sind.

4. Bauwerk nach einem der Ansprüche 2 und 3, zweite Ausbaustufe, wobei eine Abdichtungsschicht zumindest im Bereich der unteren Reihe bzw. der unteren Reihen der Drainagebohrungen und der Drainagerohre angeordnet ist.

5. Bauwerk nach einem der Ansprüche 1 bis 4, dritte Ausbaustufe, wobei in dem Schlitzraum bzw. in den Schlitzräumen zusätzlich eine Abdichtungsfolie angeordnet ist.

6. Verfahren zur Herstellung des Bauwerkes der ersten Ausbaustufe nach einem der Ansprüche 1 bis 3, wobei zunächst mit einer Streckenvortriebsmaschine die Servicestrecke aufgefahren wird und danach von übertage aus mit den Hilfsmitteln der Erdölbohrtechnik mit Hilfe von Casings, die aus einzelnen mit Drainagelöchern versehenen Casingschüssen zusammengesetzt sind, verrohrte Drainagebohrungen eingebracht werden.

7. Verfahren nach Anspruch 6, wobei in die Casings nach ziehen des Bohrgestänges Tubings als Wartungsrohre für die Casings eingeführt werden.

8. Verfahren nach einem der Ansprüche 6 oder 7 in der Fortführung zur Herstellung des Bauwerkes der zweiten Ausbaustufe, wobei der Abdichtungswerkstoff durch die Drainagelöcher der Casings in das die Casings umgebende Gebirge gedrückt wird.

9. Verfahren nach einem der Ansprüche 6 bis 8 in der Fortführung zur Herstellung des Bauwerkes der dritten Ausbaustufe, wobei der Schlitzraum quer zur Servicestrecke sowie von dieser ausgehend nach übertage als bergbautechnischer Strebbetrieb mit Strebmaschinen in Form einer Hereingewinnungsmaschine, einer Fördereinrichtung und eines Ausbaus aufgefahren wird, dessen Strebmündung in der Servicestrecke angeordnet wird und dessen Strebmund zutage tritt, wobei das mit der Hereingewinnungsmaschine hereingewonnene Gestein mit Hilfe der Fördereinrichtung über die Strebmündung in die Servicestrecke eingeführt wird und in dieser nach übertage verbracht wird und wobei zumindest der abdichtende Vollversatz über den übertägigen Strebmund in den Schlitzraum eingeführt wird.

10. Verfahren nach Anspruch 9, wobei in dem Strebbetrieb mit einem Kettenkratzförderer gearbeitet wird, auf dessen Förderrinne eine Schrämmaschine geführt wird, wobei die Antriebsaggregate der Kettenkratzförderer und der Schrämmaschine im Bereich des zuvor erzeugten Strebmundes übertage angeordnet werden, und daß in dem Strebbetrieb an die Förderrinne Schreitausbaugestelle angeschlossen werden, die nach Maßgabe des wandernden Strebbetriebes, der fortschreitenden Hereingewinnung des Gesteins folgend, gesteuert werden.

Fig. 1

_Fig. 2_

_Fig. 3_

_Fig. 4_

8

_Fig.5_

_Fig.6_

Fig. 7

Fig. 8

Fig. 9

_Fig. 10_

EP 0 461 472 A2